# EUROPÄISCHE PATENTSCHRIFT

(11) **EP 3 526 891 B1**
(45) Veröffentlichungstag und Bekanntmachung des Hinweises auf die Patenterteilung: **26.08.2020**
(21) Anmeldenummer: 17777899.0
(22) Anmeldetag: 02.10.2017
(51) Int. Cl.: H02M 3/158

(54) **REGELVORRICHTUNG FÜR EINEN GLEICHSPANNUNGSKONVERTER, GLEICHSPANNUNGSKONVERTER UND VERFAHREN ZUR REGELUNG EINES GLEICHSPANNUNGSKONVERTERS**
CONTROL DEVICE FOR A DC CONVERTER, DC CONVERTER, AND METHOD FOR CONTROLLING A DC CONVERTER
DISPOSITIF DE RÉGULATION POUR UN CONVERTISSEUR CONTINU-CONTINU, CONVERTISSEUR CONTINU-CONTINU ET PROCÉDÉ DE RÉGULATION D'UN CONVERTISSEUR CONTINU-CONTINU

(30) Priorität: 11.10.2016 DE 102016219740
(43) Veröffentlichungstag der Anmeldung: 21.08.2019
(73) Patentinhaber: Robert Bosch GmbH, 70442 Stuttgart (DE)
(72) Erfinder: ESTEGHLAL, Gholamabas, 70499 Stuttgart -Weilimdorf (DE)
(86) Internationale Anmeldenummer: PCT/EP2017/074938
(87) Internationale Veröffentlichungsnummer: WO 2018/069076

(56) Entgegenhaltungen:
- EP-A1- 2 919 374
- EP-A1- 2 980 974
- DE-A1-102007 025 229
- US-A1- 2003 107 352
- US-A1- 2007 096 705

## Beschreibung

Die vorliegende Erfindung betrifft eine Regelvorrichtung für einen Gleichspannungskonverter sowie einen Gleichspannungskonverter mit einer solchen Regelvorrichtung. Ferner betrifft die vorliegende Erfindung ein Verfahren zur Regelung eines Gleichspannungskonverters. Insbesondere betrifft die vorliegende Erfindung eine Regelung von Gleichspannungskonverter mit mehreren Gleichspannungswandler-Modulen.

### Stand der Technik

Gleichspannungswandler werden dazu verwendet, eine eingangsseitig bereitgestellte Gleichspannung in eine weitere Gleichspannung zu konvertieren. Dabei kann die konvertierte Gleichspannung von der eingansseitig bereitgestellten Gleichspannung beispielsweise in der Spannungshöhe abweichen. Zur Leistungserhöhung können mehrere Gleichspannungswandler parallel geschaltet werden. Bei einer solchen Parallelschaltung mehrerer Gleichspannungswandler ist beispielsweise ein Master-Slave-Betrieb möglich. Dabei übernimmt der Master-Gleichspannungswandler die Spannungsregelung im ausgangsseitigen Gesamtsystem. Der oder die weiteren Gleichspannungswandler tragen als eine vom Master gesteuerte Stromquelle zur Erhöhung der Ausgangsleistung bei.

Die Druckschrift EP 1143 591 B1 offenbart ein Verfahren und eine Vorrichtung zur Regelung des Parallelbetriebs von Gleichspannungswandlern, bei welchem einer der Gleichspannungswandler eine Master-Funktion ausübt, und die anderen Gleichspannungswandler eine Slave-Funktion ausüben. Der Master-Gleichspannungswandler führt hierbei eine Spannungsregelung aus, während die weiteren Gleichspannungswandler als Stromquelle arbeiten. Die Druckschriften DE10 2007 025229 A1, US 2003/107352 A1, EP 2 980 974 A1 sowie US 2007/096705 A1 offenbaren weiteren Stand der Technik.

### Offenbarung der Erfindung

Die vorliegende Erfindung offenbart eine Regelvorrichtung für einen Gleichspannungskonverter mit den Merkmalen des Patentanspruchs 1, einen Gleichspannungskonverter mit den Merkmalen des Patentanspruchs 6 sowie ein Verfahren zur Regelung eines Gleichspannungskonverters mit den Merkmalen des Patentanspruchs 8.

### Demgemäß ist vorgesehen:

Eine Regelvorrichtung für einen Gleichspannungskonverter mit mehreren Gleichspannungswandler-Modulen. Die Regelvorrichtung umfasst eine Vorsteuereinrichtung, einen Spannungsregler und mehrere Stromregler. Insbesondere entspricht die Anzahl der Stromregler in der Regelvorrichtung der Anzahl der Gleichspannungswandler-Module in dem Gleichspannungskonverter. Die Vorsteuereinrichtung ist dazu ausgelegt, eine erste Regelgröße zu generieren. Die erste Regelgröße wird durch die Vorsteuereinrichtung basierend auf einem Sollwert für eine Ausgangsspannung des Gleichspannungswandlers und einem Wert für eine Eingangsspannung des Gleichspannungskonverters generiert. Der Spannungsregler ist dazu ausgelegt, eine zweite Regelgröße zu generieren. Die zweite Regelgröße wird basierend auf dem Sollwert der Ausgangsspannung des Gleichspannungskonverters und einem ermittelten Wert der Ausgangsspannung des Gleichspannungskonverters generiert. Jeder der mehrere Stromregler ist einem der Gleichspannungswandler-Modul zugeordnet. Dabei sind die Stromregler jeweils dazu ausgelegt, eine dritte Regelgröße für das jeweils zugeordnete Gleichspannungswandler-Modul zu generieren. Die dritten Regelgrößen werden basierend auf einem Sollwert für den Strom in dem jeweils zugeordneten Gleichspannungswandler-Modul und einem ermittelten Wert für einen Strom in dem jeweils zugeordneten Gleichspannungswandler-Modul generiert. Anschließend kann an dem jeweils zugeordneten Gleichspannungswandler-Modul eine Kombination der ersten Regelgröße von der Vorsteuereinrichtung, der zweiten Regelgröße von dem Spannungsregler und der dritten Regelgröße von dem jeweils zugeordneten Gleichspannungswandler-Modul bereitgestellt werden. Insbesondere kann diese Kombination eine Summe der ersten Regelgröße der zweiten Regelgröße und der jeweiligen dritten Regelgröße umfassen.

### Ferner ist vorgesehen:

Ein Gleichspannungskonverter mit mehreren Gleichspannungswandler-Modulen und einer erfindungsgemäßen Regelvorrichtung. Jedes der mehreren Gleichspannungswandler-Module ist hierbei dazu ausgelegt, eine Eingangsgleichspannung in eine Ausgangsgleichspannung zu konvertieren.

### Weiterhin ist vorgesehen:

Ein Verfahren zur Regelung eines Gleichspannungskonverters mit mehreren Gleichspannungswandler-Modulen. Das Verfahren umfasst einen Schritt zum Erzeugen einer ersten Regelgröße. Die erste Regelgröße wird basierend auf einem Sollwert für eine Ausgangsspannung des Gleichspannungskonverters und einem Wert für eine Eingangsspannung des Gleichspannungskonverters erzeugt. Weiterhin umfasst das Verfahren einen Schritt zum Erzeugen einer zweiten Regelgröße. Die zweite Regelgröße wird basierend auf einem Sollwert für die Ausgangsspannung des Gleichspannungskonverters und einem ermittelten Wert für die Ausgangsspannung des Gleichspannungskonverters erzeugt. Weiterhin umfasst das Verfahren einen Schritt zum Erzeugen mehrerer dritter Regelgrößen. Hierbei kann für jedes Gleichspannungswandler-Modul des Gleichspannungskonverters eine separate dritte Regelgröße erzeugt werden. Jede dieser dritten Regelgrößen ist einem Gleichspannungswandler-Modul zugeordnet. Die dritte Regelgröße für das jeweils zugeordnete Gleichspannungswandler-Modul wird basierend auf einem Sollwert für einen Strom in dem jeweils zugeordneten Gleichspannungswandler-Modul und einem ermittelten Wert für einen Strom in dem jeweils zugeordneten Gleichspannungswandler-Modul erzeugt. Schließlich umfasst das Verfahren einen Schritt zum Ansteuern der mehreren Gleichspannungswandler-Module mit einer Kombination der ersten Regelgröße, der zweiten Regelgröße und der jeweiligen dritten Regelgröße, welche dem entsprechenden Gleichspannungswandler-Modul zugeordnet ist. Die Kombination der ersten, zweiten und dritten Regelgröße kann hierbei beispielsweise durch Summation der Regelgrößen ermittelt werden.

### Vorteile der Erfindung

Der vorliegenden Erfindung liegt die Erkenntnis zugrunde, dass bei einer Parallelschaltung mehrere Gleichspannungswandler nicht nur die Ausgangsspannung des Gesamtsystems eingestellt werden muss, sondern dass auch für jeden der parallelgeschalteten Gleichspannungswandler sichergestellt werden muss, dass keine Überlastung stattfindet. Insbesondere muss zu einem Schutz der Bauteile sowie zur Optimierung der Lebensdauer sichergestellt werden, dass in keinem der parallelgeschalteten Gleichspannungswandler eine Überlastung aufgrund eines zu hohen elektrischen Stroms oder ähnlichem erfolgt.

Der vorliegenden Erfindung liegt daher die Idee zugrunde, dieser Erkenntnis Rechnung zu tragen und einen Gleichspannungskonverter vorzusehen, bei welchem für jedes von mehreren parallelgeschalteten Gleichspannungswandler-Modulen eine individuelle Stromregelung erfolgen kann. Dabei ist es insbesondere vorgesehen, zunächst für die Parallelschaltung mehrerer Gleichspannungswandler-Module, soweit als möglich, gemeinsame Regelparameter zu ermitteln. Anschließend können diese für alle Gleichspannungswandler-Module relevanten Regelparameter zusätzlich mit einem für jedes Gleichspannungswandler-Modul individuell bestimmten Regelparameter zur Anpassung des elektrischen Stroms in dem jeweiligen Gleichspannungswandler-Modul überlagert werden. Auf diese Weise kann eine besonders effiziente und gleichzeitig individuelle Regelung der einzelnen Gleichspannungswandler-Module erfolgen.

Da einerseits die grundlegende Regelung basierend auf zentral ermittelten Regelparameter für alle Gleichspannungswandler-Module erfolgt und darüber hinaus andererseits für jedes individuelle Gleichspannungswandler-Modul ein zusätzlicher Regelparameter überlagert wird, kann auf diese Weise eine sehr gut skalierbare Regelung mehrerer parallelgeschalteter Gleichspannungswandler-Module erzielt werden. Insbesondere muss für jedes der Gleichspannungswandler-Module nur eine relativ einfach zu realisierende Stromregelung vorgesehen werden, welche sehr kostengünstig zu realisieren ist. Die weiteren Regelparameter zur Regelung der Ausgangsspannung müssen für das gesamte System nur ein einziges Mal bestimmt werden. Dies führt zu einem besonders kompakten und damit kostengünstigen Aufbau des Gesamtsystems.

Gemäß einer Ausführungsform ist die Vorsteuerung der Regelvorrichtung für den Gleichspannungskonverter dazu ausgelegt, die erste Regelgröße zusätzlich unter Verwendung der ermittelten Werte für Ströme in den Gleichspannungswandler-Modulen zu generieren. Hierzu kann beispielsweise mittels eines Sensors in jedem der Gleichspannungswandler-Module und/oder mittels einer geeigneten Modellierung ein elektrischer Strom im Leistungspfad jedes Gleichspannungswandler-Moduls ermittelt werden. Diese ermittelten elektrischen Ströme können daraufhin von der Vorsteuerung ausgewertet werden. Beispielsweise kann anhand der ermittelten Ströme ein möglicher Spannungsabfall innerhalb der Gleichspannungswandler-Module bestimmt werden, welcher durch die Regelung zu kompensieren ist.

Gemäß einer Ausführungsform ist die Vorsteuerung dazu ausgelegt, den Wert der ersten Regelgröße auf einen vorgegebenen Maximalwert und/oder einen vorgegebenen Minimalwert zu begrenzen. Durch eine derartige Begrenzung des Maximalwertes bzw. des Minimalwertes kann sichergestellt werden, dass die Gleichspannungswandler-Module stets in einem zulässigen und/oder optimalen Arbeitsbereich angesteuert werden.

Gemäß einer Ausführungsform ist der Spannungsregler der Regelvorrichtung dazu ausgelegt, den Wertebereich der zweiten Regelgröße einzuschränken, wenn alle Stromregler eine von Null verschiedene dritte Regelgröße generieren. Auf diese Weise kann sichergestellt werden, dass die Regelung durch den Spannungsregler nicht den Regelungen durch die Stromregler entgegenläuft. Beispielsweise kann hierzu von jedem Stromregler ein Ausgangssignal bereitgestellt werden, welches anzeigt, Stromregler eine von Null verschiedene Regelgröße ausgibt und somit aktuell aktiv ist. Durch das Verknüpfen der Ausgangssignale von allen Stromreglern kann daraufhin festgestellt werden, ob alle Stromregler aktuell aktiv sind und eine von Null verschiedene Regelgröße ausgeben. In diesem Fall kann die Regelgröße des Spannungsreglers derart begrenzt werden, dass der Spannungsregler nur eine Regelung in die gleiche Richtung wie die aktiven Stromregler vornimmt. Auf diese Weise können gegenläufige Regelungen von Spannungsregler und Stromreglern verhindern werden.

Gemäß einer Ausführungsform umfassen die erste Regelgröße, die zweite Regelgröße und die dritten Regelgrößen jeweils Phasenwinkel zur Spezifikation eines Tastverhältnisses. Derartige Regelgrößen sind insbesondere für die Regelung von Gleichspannungswandler, welche auf Basis einer Pulsbreitenmodulation oder ähnlichem betrieben werden, sehr gut geeignet.

Gemäß einer Ausführungsform des Gleichspannungskonverters umfasst der Gleichspannungskonverter Gleichspannungswandler-Module, welche dazu ausgelegt sind, eine bidirektionale Gleichspannungswandlung auszuführen. In diesem Fall kann auch die Regelvorrichtung je nach Betrieb eine bidirektionale Regelung des Gleichspannungskonverters vornehmen.

Gemäß einer Ausführungsform des Verfahrens zur Regelung eines Gleichspannungskonverters umfasst die Kombination der ersten Regelgröße, der zweiten Regelgröße und der jeweiligen dritten Regelgröße eine Summe der ersten Regelgröße, der zweiten Regelgröße und der jeweiligen dritten Regelgröße. Insbesondere durch die Summation der drei Regelgrößen kann auf einfache Weise eine gemeinsame Regelgröße gebildet werden, welche zur Regelung der jeweiligen Gleichspannungswandler-Module geeignet ist.

### Kurze Beschreibung der Zeichnungen

Die vorliegende Erfindung wird nachfolgend anhand der in den schematischen Figuren der Zeichnungen angegebenen Ausführungsbeispiele näher erläutert. Dabei zeigen:
- Figur 1:: eine schematische Darstellung eines Gleichspannungskonverters mit einer Regelvorrichtung gemäß einer Ausführungsform;
- Figur 2:: eine schematische Darstellung einer Reglerstruktur für eine Vorsteuereinrichtung gemäß einer Ausführungsform;
- Figur 3:: eine schematische Darstellung einer Reglerstruktur für einen Spannungsregler gemäß einer Ausführungsform;
- Figur 4:: eine schematische Darstellung einer Reglerstruktur für einen Stromregler gemäß einer Ausführungsform; und
- Figur 5:: eine schematische Darstellung eines Ablaufdiagramms für ein Verfahren zur Regelung eines Gleichspannungskonverters, wie es einer Ausführungsform zugrunde liegt.

### Ausführungsformen der Erfindung

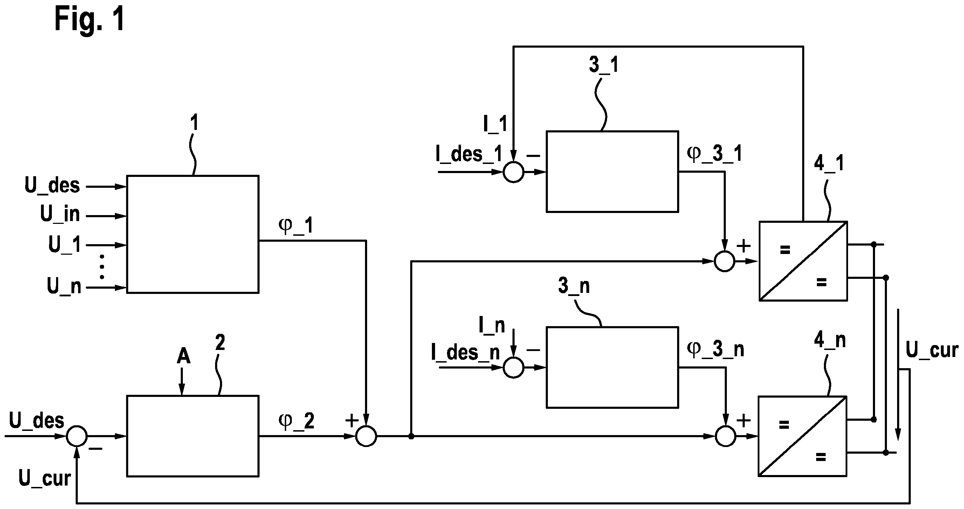

Figur 1 zeigt eine schematische Darstellung eines Gleichspannungskonverters gemäß einer Ausführungsform. Der Gleichspannungskonverter umfasst mehrere Gleichspannungswandler-Module 4-i. Alle die Gleichspannungswandler-Module 4-i werden parallel eingangsseitig mit einer Eingangsspannung U_in gespeist. Ausgangsseitig sind die Gleichspannungswandler-Module 4-i ebenfalls parallelgeschaltet und stellen eine Ausgangsspannung U_cur bereit. Bei den Gleichspannungswandler-Modulen 4-i kann es sich um sogenannte DC/DC-Wandler handeln, welche eine Eingangsgleichspannung in eine Ausgangsgleichspannung konvertieren. Hierbei sind insbesondere auch solche Gleichspannungswandler-Module 4-i möglich, welche einen bidirektionalen Betrieb erlauben, das heißt, dass die Gleichspannungswandler-Module sowohl eine an einer ersten Seite bereitgestellte Gleichspannung in eine Gleichspannung konvertieren, welche an einer zweiten Seite bereitgestellt wird, und alternativ auch eine an der zweiten Seite bereitgestellte Gleichspannung in eine Gleichspannung konvertieren können, die in diesem Fall an der ersten Seite bereitgestellt wird. Bei den Gleichspannungswandler-Modulen 4-i kann es sich sowohl um Gleichspannungswandler-Module handeln, welche eine eingangsseitig bereitgestellte Gleichspannung in eine höhere Ausgangsspannung konvertieren und/oder eine eingangsseitig bereitgestellte Gleichspannung auch in eine Gleichspannung konvertieren, welche niedriger ist als die eingangsseitig bereitgestellte Gleichspannung.

Bei den parallelgeschalteten Gleichspannungswandler-Modulen 4-i kann es sich um mehrere gleiche oder gleichartige Gleichspannungswandler-Module handeln. Darüber hinaus ist es jedoch auch möglich, dass einige oder gegebenenfalls auch alle parallelgeschalteten Gleichspannungswandler-Module 4-i unterschiedlich aufgebaut sind. Insbesondere ist es auch möglich, Gleichspannungswandler-Module 4-i mit unterschiedlichen Maximalleistungen parallel zu schalten.

Für die Steuerung der einzelnen Gleichspannungswandler-Module 4-i kann an jedem der Gleichspannungswandler-Module 4-i ein Steuersignal bereitgestellt werden. Bei diesem Steuersignal kann es sich beispielsweise um eine Regelgröße handeln, welche Einfluss auf den Betrieb des jeweiligen Gleichspannungswandler-Moduls 4-i hat. Erfolgt beispielsweise die Ansteuerung innerhalb der einzelnen Gleichspannungswandler-Module 4-i mittels einer Pulsbreitenmodulation, so kann durch die Regelgröße des Steuersignals ein Tastverhältnis für die Pulsbreitenmodulation eingestellt werden. Insbesondere kann beispielsweise als Regelgröße ein Phasenwinkel bereitgestellt werden, welcher ein einzustellendes Tastverhältnis für eine Pulsbreitenmodulation vorgibt. Im Folgenden wird eine Reglerstruktur für das Bereitstellen einer solchen Regelgröße an den einzelnen Gleichspannungswandler-Modulen 4-i beschrieben.

Für die Generierung der Regelgrößen zur Steuerung der einzelnen Gleichspannungswandler-Module 4-i werden drei separat erzeugte Regelgrößen miteinander kombiniert. Hierbei wird durch eine Vorsteuereinrichtung 1 eine erste Regelgröße ϕ_1 unter Verwendung des Wertes U_in für die eingangsseitig anliegende Eingangsspannung und eines Sollwertes U_des für die ausgangsseitig bereitzustellende Gleichspannung erzeugt. Weiterhin generiert ein Spannungsregler 2 eine zweite Regelgröße ϕ_2 basierend auf einer Abweichung des Sollwertes U_des für die ausgangsseitige bereitzustellende Spannung und des tatsächlichen Werts U_cur der ausgangsseitig bereitgestellten Gleichspannung. Hierbei kann für den gesamten Gleichspannungskonverter nur eine einzige Vorsteuereinrichtung 1 und ein einziger Spannungsregler 2 vorgesehen sein. Entsprechend werden für alle Gleichspannungswandler-Module 4-i dieselben ersten und zweiten Regelgrößen ϕ_1, ϕ_2 verwendet. Basierend auf dieser ersten Regelgröße ϕ_1 und der zweiten Regelgröße ϕ_2 kann eine eventuell auftretende Abweichung zwischen dem Sollwert U_des und dem Wert U_cur der tatsächlichen Ausgangsspannung kompensiert werden.

Zusätzlich wird für jedes Gleichspannungswandler-Modul 4-i eine weitere, dritte Regelgröße ϕ_3_i generiert. Hierzu ist für jedes Gleichspannungswandler-Modul 4-i ein separater Stromregler 3-1 vorgesehen. Der Stromregler 3-1 erzeugt hierbei die dritte Regelgröße ϕ_3_i basierend auf einer Abweichung zwischen einem vorgegebenen Sollwert I_des_i für einen elektrischen Strom innerhalb des korrespondierenden Gleichspannungswandler-Moduls 4-i und dem aktuellen Wert I_i des elektrischen Stroms innerhalb des entsprechenden Gleichspannungswandler-Moduls 4-i. Bei dem zu betrachtenden elektrischen Strom kann sich in dem elektrischen Strom innerhalb des Leistungspfades der Gleichspannungswandler-Module 4-i handeln. Grundsätzlich ist beispielsweise die Erfassung des elektrischen Stroms an einem eingangsseitigen Anschluss, einem ausgangsseitigen Anschluss oder einem beliebigen Punkt innerhalb des Leistungspfades des Gleichspannungswandler-Moduls 4-i möglich. Die dabei zu betrachtenden elektrischen Ströme werden vorzugsweise mittels Stromsensoren erfasst. Grundsätzlich ist jedoch auch eine modellbasierte Berechnung der elektrischen Ströme innerhalb der Gleichspannungswandler-Module 4-i möglich.

Entspricht der tatsächliche Strom I_i innerhalb des Gleichspannungswandler-Moduls 4-i dem jeweiligen vorgegebenen Sollwert I_des_i, so erfolgt durch den jeweiligen Stromregler 3-1 keine Anpassung der zentral ermittelten ersten Regelgröße ϕ_1 und der zweiten Regelgröße ϕ_2. Weicht der tatsächliche Stromwert I_i von dem jeweiligen Sollwert I_des_i ab, so kann durch den entsprechenden Stromregler 3-1 eine entsprechende dritte Regelgröße ϕ_3_i ausgegeben werden, um den elektrischen Strom durch das zugeordnete Gleichspannungswandler-Modul 4-i anzupassen. Insbesondere wenn der tatsächliche elektrische Strom I_i größer ist als der jeweilige Sollwert I_des_i, so kann durch das Bereitstellen einer entsprechenden dritten Regelgröße ϕ_3_i der elektrische Strom durch das zugeordnete Gleichspannungswandler-Modul 4-i abgesenkt werden. Auf diese Weise kann beispielsweise der maximale elektrische Strom durch ein Gleichspannungswandler-Modul 4-i begrenzt werden. Weiterhin ist es auch möglich, beispielsweise bei einem Temperaturanstieg innerhalb eines Gleichspannungswandler-Moduls 4-i den elektrischen Strom durch das entsprechende Gleichspannungswandler-Modul 4-i zu begrenzen oder abzusenken, um einen weiteren Temperaturanstieg sowie gegebenenfalls eine Beschädigung oder gar Zerstörung des entsprechenden Gleichspannungswandler-Moduls 4-i zu verhindern.

Darüber hinaus ist es auch möglich, durch Vorgabe der Sollwerte l_des_i für die entsprechenden Ströme in den Gleichspannungswandler-Modulen 4-i die elektrischen Ströme und somit die Leistungen gemäß beliebigen Vorgaben einzustellen. Beispielsweise kann eine Gleichverteilung in allen parallel angeordneten Gleichspannungswandler-Modulen 4-i eingestellt werden. Ferner kann, wie oben bereits ausgeführt, aufgrund von weiteren Parameter bei Bedarf auch der elektrische Strom und somit die Leistung in einem oder mehreren der Gleichspannungswandler-Module 4-i abgesenkt werden. Ferner ist es auch möglich, mehrere unterschiedlich Gleichspannungswandler-Module 4-i parallelzuschalten. In diesem Fall kann durch Vorgabe der jeweiligen Sollwerte l_des_i für die elektrischen Ströme eine entsprechende Anpassung an die unterschiedlichen Gleichspannungswandler-Module 4-i eingestellt werden. Insbesondere können bei mehreren unterschiedlichen Gleichspannungswandler-Modulen 4-i die einzelnen Gleichspannungswandler-Module 4-i jeweils mit einem gleichen Aussteuerungsgrad betrieben werden. Das heißt, dass alle parallelgeschalteten Gleichspannungswandler-Module 4-i zumindest annähernd gleichmäßig bezüglich ihrer maximalen Leistung angesteuert werden. Darüber hinaus sind auch beliebige weitere Verteilungen für die Ansteuerung der parallelgeschalteten Gleichspannungswandler-Module 4-i möglich.

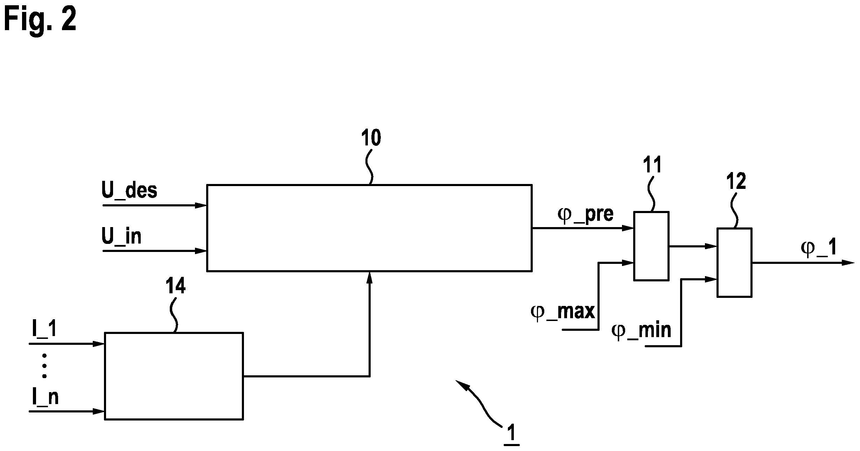

Figur 2 zeigt eine schematische Darstellung einer Reglerstruktur einer Vorsteuereinrichtung 1 für die Regelvorrichtung gemäß einer Ausführungsform. Die Vorsteuereinrichtung 1 generiert einen ersten Regelwert ϕ_1, welcher zunächst eine grundlegende Regelgröße für die Gleichspannungswandler-Module 4-i des Gleichspannungskonverters darstellt. Diese erste Regelgröße ϕ_1 wird insbesondere unter Verwendung des Sollwerts U_des des Gleichspannungskonverters und dem Wert der Eingangsspannung U_in des Gleichspannungskonverters generiert. Darüber hinaus kann die Vorsteuereinrichtung 1 auch die elektrischen Ströme in den einzelnen Gleichspannungswandler-Modulen 4-i auswerten. Basierend auf diesen elektrischen Strömen I_i in den Gleichspannungswandler-Modulen 4-i kann in dem Modul 14 ein Spannungsabfall innerhalb der Bauteile der Gleichspannungswandler-Module 4-i ermittelt und bei der Bestimmung der ersten Regelgröße ϕ_1 mit berücksichtigt werden. Aus diesen Parametern, insbesondere dem Sollwert U_des für die Ausgangsspannung, dem Wert U_in für die Eingangsspannung sowie gegebenenfalls den elektrischen Strömen I_i durch die Gleichspannungswandler-Module 4-i kann in der Regeleinrichtung 10 zunächst eine Regelgröße ϕ_pre berechnet werden. Diese Regelgröße ϕ_pre kann ferner gegebenenfalls durch die Begrenzungselemente 11 und 12 auf einen minimalen Wert ϕ_min und/oder einen maximalen Wert ϕ_max begrenzt werden. Als Ausgang stellt die Vorsteuereinrichtung 1 somit die erste Regelgröße ϕ_1 bereit.

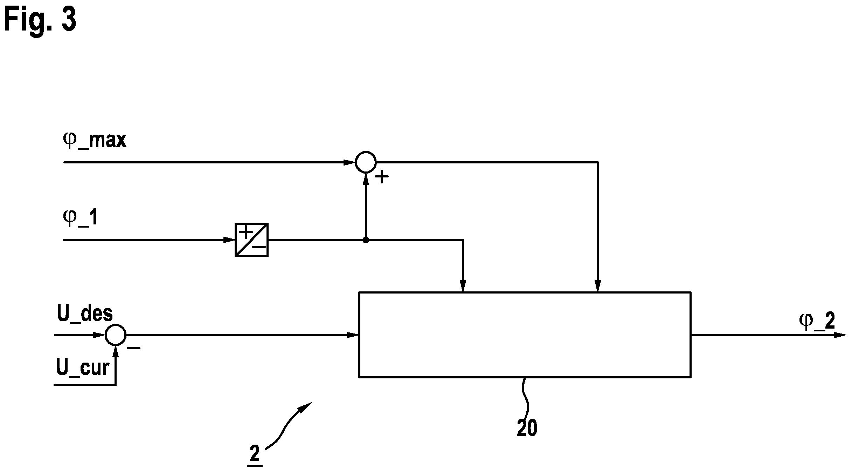

Figur 3 zeigt eine schematische Darstellung einer Reglerstruktur für einen Spannungsregler 2 einer Regelvorrichtung gemäß einer Ausführungsform. Der Spannungsregler 2 vergleicht zunächst die tatsächliche Spannung U_cur mit einem Sollwert U_des für die Ausgangsspannung. Die Differenz dieser beiden Werte stellt einen Eingangswert für eine Regeleinrichtung, beispielsweise einen PID-Regler dar. Darüber hinaus kann je nach Anwendungsfall jedoch auch ein von einem PID-Regler abweichende Regeleinrichtung eingesetzt werden. Ferner kann auch diese Regeleinrrichtung 20 Vorgaben für Maximalwert und Minimalwert der zu ermittelnden zweite Regelgröße ϕ_2 berücksichtigen. Insbesondere kann beispielsweise als Maximalwert für die zweite Regelgröße ϕ_2 eine Differenz des Maximalwerts ϕ_max und der ersten Regelgröße ϕ_1 als Maximum für die zweite Regelgröße ϕ_2 vorgegeben werden. Ein Minimalwert für die zweite Regelgröße ϕ_2 kann beispielsweise als der negative Wert der Regelgröße ϕ_1 vorgegeben werden. Somit kann der Spannungsregler 2 im äußersten Fall die erste Regelgröße ϕ_1 vollständig kompensieren. Als Ausgangssignal liefert der Spannungsregler 2 die zweite Regelgröße ϕ_2.

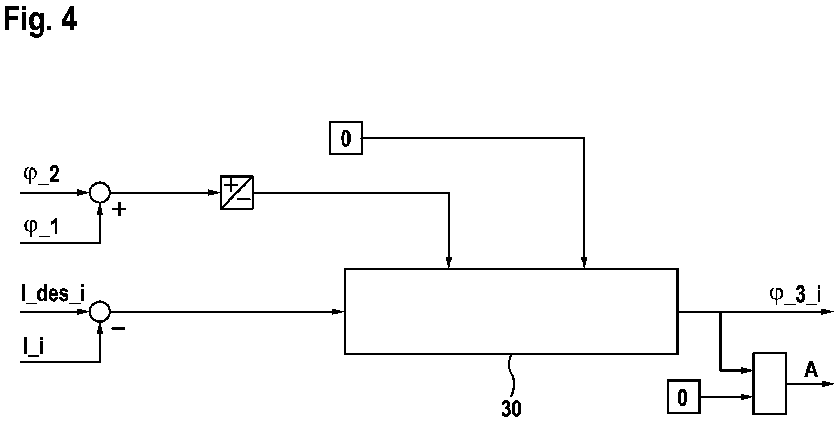

Figur 4 zeigt eine schematische Darstellung einer Reglerstruktur für einen Stromregler 3-1 einer Regelvorrichtung gemäß einer Ausführungsform. Der Stromregler 3-1 bildet zunächst eine Differenz eines Sollwerts l_des_i für den Strom in dem zugeordneten Gleichspannungswandler-Modul 4-i und dem tatsächlichen Wert des elektrischen Stroms I_i in dem entsprechenden Gleichspannungswandler-Modul 4-i. Diese Differenz bildet den Ausgangswert für die von dem Stromregler 3-i zur ermittelten dritten Regelgröße ϕ_3_i. Beispielsweise kann diese Differenz einer Regeleinrichtung 30, insbesondere zum Beispiel einem PID-Regler zugeführt werden. Weiterhin kann diese Regeleinrichtung 30 Vorgaben für einen Maximalwert und einen Minimalwert der auszugebenden dritten Regelgröße ϕ_3_i berücksichtigt. Im hier dargestellten Beispiel ist als Maximalwert für die auszugebende Regelgröße ein Wert von Null vorgegeben. Das heißt, der Stromregler 3-i kann die erste und zweite Regelgröße ϕ_1, ϕ_2 nur verringern. Als Minimumwert kann beispielsweise die negative Differenz zwischen der zweiten Regelgröße ϕ_2 und der ersten Regelgröße ϕ_1 vorgegeben werden. Hieraus generiert die Regeleinrichtung des Stromreglers 3-i eine dritte Regelgröße ϕ_3_i und gibt diese aus. Ferner kann mittels des Komparators 31 oder einer anderen geeignete Einrichtung überprüft werden, ob die ausgegebene dritte Regelgröße ϕ_3_i von Null abweicht. In diesem Fall ist der Stromregler 3-i aktiv und der Komparator 31 gibt ein entsprechendes Signal A aus.

Für die Ansteuerung eines Gleichspannungswandler-Moduls 4-i werden die erste Regelgröße ϕ_1 und die zweite Regelgröße ϕ_2 summiert und zu dieser Summe wird jeweils die dritte Regelgröße ϕ_3_i eines der Stromregler 3-i hinzuaddiert. Die so gebildete Summe aus den drei Regelgrößen wird dem entsprechenden Gleichspannungswandler-Modul 4-i zugeführt. Auf diese Weise kann aus den für alle Gleichspannungswandler-Module 4-i gemeinsam ermittelten ersten Regelgröße ϕ_1 und zweiten Regelgröße ϕ_2 sowie einer individuellen dritten Regelgröße ϕ_3_i, welche mittels einem dem Gleichspannungswandler-Modul 4-i zugeordneten Stromregler 3-i generiert worden ist, für jedes Gleichspannungswandler-Modul 4-i eine individuelle Regelgröße ϕ_3_i ermittelt.

Somit kann jedes Gleichspannungswandler-Modul 4-i individuell mit einer geeigneten Regelgröße angesteuert werden. Die erste Regelgröße ϕ_1, die zweite Regelgröße ϕ_2 und die jeweilige dritte Regelgröße ϕ_3_i werden dabei jeweils addiert und daraufhin dem entsprechenden Gleichspannungswandler-Modul 4-i zugeführt.

Solange mindestens ein Stromregler 3-1 nicht aktiv ist, das heißt solange mindestens einer der Stromregler 3-1 als dritte Regelgröße ϕ_3_i einen Wert von Null ausgibt, kann die Regelung der Gleichspannungswandler-Module 4-i wie zuvor ausgeführt durchgeführt werden.

Wenn alle Stromregler 3-i gleichzeitig eine von Null verschiedene Regelgröße ϕ_3_i ausgeben und somit eine Begrenzung des elektrischen Stroms in allen Gleichspannungswandler-Modulen 4-i ausgeführt wird, so sollte der Spannungsregler 2 die zweite Regelgröße ϕ_2 nur in dieselbe Richtung korrigieren, wie die Stromregler 3-1. Hierzu kann das zuvor beschriebene Signal, welches anzeigt, ob die Stromregler 3-i aktiv sind, dem Spannungsregler 2 bereitgestellt werden. Der Spannungsregler 2 kann daraufhin überprüfen, ob sämtliche Stromregler 3-i eine Strombegrenzung ausführen. In diesem Fall kann die Regelung durch den Stromregler 2 entsprechend angepasst werden, so dass der Stromregler 2 nur eine zweite Regelgröße ϕ_2 ausgibt, welche die erste Regelgröße ϕ_1 in die gleiche Richtung verändert, wie die dritte Regelgrößen ϕ_3_i der Stromregler 3-i.

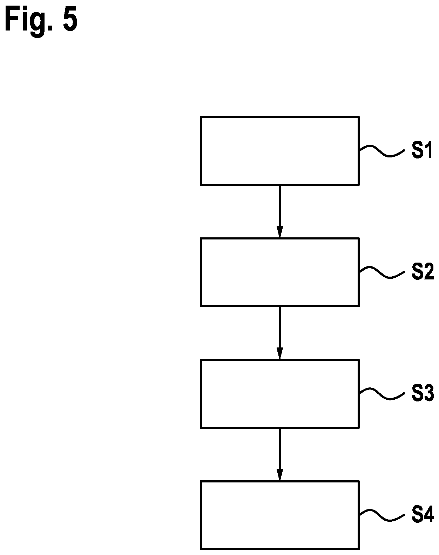

Figur 5 zeigt eine schematische Darstellung eines Ablaufdiagramms, wie es einem Verfahren zur Regelung eines Gleichspannungskonverters mit mehreren Gleichspannungswandler-Modulen 4-i zugrunde liegt. In Schritt S1 wird eine erste Regelgröße ϕ_1 erzeugt. Die erste Regelgröße ϕ_1 wird insbesondere basierend auf einem Sollwert U_des für eine Ausgangsspannung des Gleichspannungskonverters und einem Wert U_cur für eine Eingangsspannung des Gleichspannungskonverters ermittelt. In Schritt S2 wird eine zweite Regelgröße ϕ_2 erzeugt. Die zweite Regelgröße ϕ_2 wird insbesondere basierend auf dem Sollwert U_des der Ausgangsspannung des Gleichspannungskonverters und einem ermittelten Wert U_cur der Ausgangsspannung des Gleichspannungskonverters erzeugt. In Schritt S3 werden mehrere dritte Regelgrößen ϕ_3_i erzeugt. Die dritten Regelgrößen ϕ_3_i sind jeweils einem der Gleichspannungswandler-Module 4-i zugeordnet. Die dritten Regelgrößen ϕ_3_i werden für jedes zugeordnete Gleichspannungswandler-Modul 4-i basierend auf einem Sollwert l_des_i für einen Strom in dem jeweils zugeordneten Gleichspannungswandler-Modul 4-i und einem ermittelten Wert I_i für einen Strom in dem jeweils zugeordneten Gleichspannungswandler-Modul 4-i erzeugt. In Schritt S4 werden die Gleichspannungswandler-Module 4-i mit einer Kombination der ersten Regelgröße ϕ_1, der zweiten Regelgröße ϕ_2 und den dritten Regelgrößen ϕ_3_i des jeweils zugeordneten Gleichspannungswandler-Moduls 4-i angesteuert. Die Kombination der ersten Regelgröße ϕ_1, der zweiten Regelgröße ϕ_2 und den dritten Regelgrößen ϕ_3_i kann dabei insbesondere eine Summe der drei Regelgrößen umfassen.

Zusammenfassend betrifft die vorliegende Erfindung eine Regelung für einen Gleichspannungskonverter mit mehreren parallelgeschalteten Gleichspannungswandler-Modulen. Hierbei wird für die Regelung aller Gleichspannungswandler-Module eine gemeinsame Größe für die Spannungsregelung gebildet. Zusätzlich ist für jedes Gleichspannungswandler-Modul ein separater Stromregler vorgesehen. Für jedes Gleichspannungswandler-Modul kann eine Regelgröße aus der individuell ermittelten Stromregelung und der gemeinsam ermittelten Spannungsregelung gebildet werden.

## Patentansprüche

1. Regelvorrichtung für einen Gleichspannungskonverter mit mehreren parallelgeschalteten Gleichspannungswandler-Modulen (4-i), mit:
einer Vorsteuereinrichtung (1), die dazu ausgelegt ist, eine erste Regelgröße (ϕ_1) basierend auf einem Sollwert (U_des) für eine Ausgangsspannung des Gleichspannungskonverters und einem Wert (U_in) für eine Eingangsspannung des Gleichspannungskonverters zu generieren;
einem Spannungsregler (2), der dazu ausgelegt ist, eine zweite Regelgröße (ϕ_2) basierend auf dem Sollwert (U_des) der Ausgangsspannung des Gleichspannungskonverters und einem ermittelten Wert (U_cur) der Ausgangsspannung des Gleichspannungskonverters zu generieren;
mehreren Stromreglern (3-i), wobei jeweils einem Gleichspannungswandler-Modul (4-i) ein Stromregler (3-i) zugeordnet ist, und die Stromregler (3-i) jeweils dazu ausgelegt sind, eine dritte Regelgröße (ϕ_3_i ) für das jeweils zugeordnete Gleichspannungswandler-Modul (4-i) basierend auf einem Sollwert (I_des_i) für einen Strom in dem jeweils zugeordneten Gleichspannungswandler-Moduls (4-i) und einem ermittelten Wert (I_i) für einen Strom in dem jeweils zugeordneten Gleichspannungswandler-Modul (4-i) zu generieren,
und an dem jeweils zugeordneten Gleichspannungswandler-Modul (4-i) eine Kombination der ersten Regelgröße (ϕ_1), der zweiten Regelgröße (ϕ_2) und der dritten Regelgröße (ϕ_3_i ) des jeweils zugeordneten Gleichspannungswandler-Moduls (4-i) bereitzustellen.

2. Regelvorrichtung nach Anspruch 1, wobei die Vorsteuereinrichtung (1) dazu ausgelegt ist, die erste Regelgröße (ϕ_1) unter Verwendung der ermittelten Werte (I_i) für einen Strom in den Gleichspannungswander-Modulen (4-i) zu generieren.

3. Regelvorrichtung nach Anspruch 1 oder 2, wobei die Vorsteuereinrichtung (1) dazu ausgelegt ist, den Wert der ersten Regelgröße (ϕ_1) auf einem vorgegebenen Maximalwert (ϕ_max) und/oder einen vorgegebenen Minimalwert (ϕ_min) zu begrenzen.

4. Regelvorrichtung nach einem der Ansprüche 1 bis 3, wobei der Spannungsregler (2) dazu ausgelegt ist, den Wertebereich für die zweite Regelgröße (ϕ_2) einzuschränken, wenn alle Stromregler (3-i) eine von Null verschiedene dritte Regelgröße (ϕ_3_i ) generieren.

5. Regelvorrichtung nach einem der Ansprüche 1 bis 4, wobei die erste Regelgröße (ϕ_1), die zweite Regelgröße (ϕ_2) und die dritten Regelgrößen (ϕ_3_i ) jeweils Phasenwinkel zur Spezifikation eines Tastverhältnisses umfassen.

6. Gleichspannungskonverter, mit:
mit mehreren parallelgeschalteten Gleichspannungswandler-Modulen (4-i), die dazu ausgelegt sind, eine Eingangsgleichspannung (U_in) in eine Ausgangsgleichspannung zu konvertieren; und
einer Regelvorrichtung nach einem der Ansprüche 1 bis 5,
wobei für jedes Gleichspannungswandler-Modul (4-i) in dem Gleichspannungskonverter ein separater Stromregler (3-i) in der Regelvorrichtung vorgesehen ist.

7. Gleichspannungskonverter nach Anspruch 6, wobei die Gleichspannungswandler-Module (4-i) dazu ausgelegt sind, eine bidirektionale Gleichspannungswandlung auszuführen.

8. Verfahren zur Regelung eines Gleichspannungskonverters mit mehreren parallelgeschalteten Gleichspannungswandler-Modulen (4-i), mit den Schritten:
Erzeugen (S1), durch eine Vorsteuerung, einer ersten Regelgröße (ϕ_1) basierend auf einem Sollwert (U_des) für eine Ausgangsspannung des Gleichspannungskonverters und einem Wert (U_in) für eine Eingangsspannung des Gleichspannungskonverters;
Erzeugen (S2) einer zweiten Regelgröße (ϕ_2) basierend auf dem Sollwert (U_des) der Ausgangsspannung des Gleichspannungskonverters und einem ermittelten Wert (U_cur) der Ausgangsspannung des Gleichspannungskonverters;
Erzeugen (S3) mehrerer dritter Regelgrößen (ϕ_3_i), wobei jede dritte Regelgröße (ϕ_3_i ) einem Gleichspannungswandler-Modul (4-i) zugeordnet ist, und die dritte Regelgröße (ϕ_3_i ) für das jeweils zugeordnete Gleichspannungswandler-Modul (4-i) basierend auf einem Sollwert (I_des_i) für einen Strom in dem jeweils zugeordneten Gleichspannungswandler-Moduls (4-i) und einem ermittelten Wert (I_i) für einen Strom in dem jeweils zugeordneten Gleichspannungswandler-Modul (4-i) erzeugt wird;
Ansteuern (S4) der Gleichspannungswandler-Module (4-i) mit einer Kombination der ersten Regelgröße (ϕ_1), der zweiten Regelgröße (ϕ_2) und der dritten Regelgröße (ϕ_3_i ) des jeweils zugeordneten Gleichspannungswandler-Moduls (4-i).

9. Verfahren nach Anspruch 8, wobei die Kombination der ersten Regelgröße(ϕ_1) , der zweiten Regelgröße((ϕ_2) und der jeweiligen dritten Regelgröße (ϕ_3_i ) aus einer Summe der ersten Regelgröße (ϕ_1), der zweiten Regelgröße (ϕ_2) und der jeweiligen dritten Regelgröße (ϕ_3_i ) gebildet wird.

## Claims

1. Control apparatus for a DC converter with a plurality of DC-DC converter modules (4-i), comprising:
a feedforward control apparatus (1) that is configured to generate a first controlled variable (ϕ_1) on the basis of a setpoint value (U_des) for an output voltage of the DC converter and a value (U_in) for an input voltage of the DC converter;
a voltage regulator (2) that is configured to generate a second controlled variable (ϕ_2) on the basis of the setpoint value (U_des) of the output voltage of the DC converter and an ascertained value (U_cur) of the output voltage of the DC converter;
a plurality of current regulators (3-i), wherein a current regulator (3-i) is associated with a DC-DC converter module (4-i) in each case and the current regulators (3-i) are each configured to generate a third controlled variable (ϕ_3_i) for the respectively associated DC-DC converter module (4-i) on the basis of a setpoint value (I_des_i) for a current in the respectively associated DC-DC converter module (4-i) and an ascertained value (I_i) for a current in the respectively associated DC-DC converter module (4-i), and to provide a combination of the first controlled variable (ϕ_1), the second controlled variable (ϕ_2) and the third controlled variable (ϕ_3_i) of the respectively associated DC-DC converter module (4-i) at the respectively associated DC-DC converter module (4-i).

2. Control apparatus according to Claim 1, wherein the feedforward control apparatus (1) is configured to generate the first controlled variable (ϕ_1) using the ascertained values (I_i) for a current in the DC-DC converter modules (4-i).

3. Control apparatus according to Claim 1 or 2, wherein the feedforward control apparatus (1) is configured to restrict the value of the first controlled variable (ϕ_1) to a predetermined maximum value (ϕ_max) and/or a predetermined minimum value (ϕ_min).

4. Control apparatus according to any one of Claims 1 to 3, wherein the voltage regulator (2) is configured to restrict the value range for the second controlled variable (ϕ_2) if all current regulators (3-i) generate a third controlled variable (ϕ_3_i) that differs from zero.

5. Control apparatus according to any one of Claims 1 to 4, wherein the first controlled variable (ϕ_1), the second controlled variable (ϕ_2) and the third controlled variables (ϕ_3_i) each comprise phase angles for specifying a duty factor.

6. DC converter comprising:
a plurality of DC-DC converter modules (4_i) that are configured to convert an input DC voltage (U_in) into an output DC voltage; and
a control apparatus as claimed in any one of Claims 1 to 5,
wherein a separate current regulator (3-i) is provided in the control apparatus for each DC-DC converter module (4-i) in the DC converter.

7. DC converter according to Claim 6, wherein the DC-DC converter modules (4-i) are configured to carry out a bidirectional DC-DC conversion.

8. Method for regulating a DC converter comprising a plurality of DC-DC converter modules (4-i), including the steps of:
producing (S1) a first controlled variable (ϕ_1) on the basis of a setpoint value (U_des) for an output voltage of the DC converter and a value (U_in) for an input voltage of the DC converter;
producing (S2) a second controlled variable (ϕ_2) on the basis of the setpoint value (U_des) of the output voltage of the DC converter and an ascertained value (U_cur) of the output voltage of the DC converter;
producing (S3) a plurality of third controlled variables (ϕ_3_i), wherein each third controlled variable (ϕ_3_i) is associated with a DC-DC converter module (4-i) and the third controlled variable (ϕ_3_i) for the respectively associated DC-DC converter module (4-i) is produced on the basis of a setpoint value (I_des_i) for a current in the respectively associated DC-DC converter module (4-i) and an ascertained value (I_i) for a current in the respectively associated DC-DC converter module (4-i);
actuating (S4) the DC-DC converter modules (4-i) using a combination of the first controlled variable (ϕ_1), the second controlled variable (ϕ_2) and the third controlled variable (ϕ_3_i) of the respectively associated DC-DC converter module (4-i).

9. Method according to Claim 8, wherein the combination of the first controlled variable (ϕ_1), the second controlled variable (ϕ_2) and the respective third controlled variable (ϕ_3_i) is formed by a sum of the first controlled variable (ϕ_1), the second controlled variable (ϕ_2) and the respective third controlled variable (ϕ_3_i).

## Revendications

1. Arrangement de régulation pour un convertisseur de tension continue doté de plusieurs modules convertisseurs de tension continue (4-i) branchés en parallèle, comprenant :
un dispositif de commande pilote (1), qui est conçu pour générer une première grandeur de régulation (ϕ_1) en se basant sur une valeur de consigne (U_des) pour une tension de sortie du convertisseur de tension continue et une valeur (U_in) pour une tension d'entrée du convertisseur de tension continue ;
un régulateur de tension (2), qui est conçu pour générer une deuxième grandeur de régulation (ϕ_2) en se basant sur la valeur de consigne (U_des) de la tension de sortie du convertisseur de tension continue et une valeur déterminée (U_cur) de la tension de sortie du convertisseur de tension continue ;
plusieurs régulateurs de courant (3-i), un régulateur de courant (3-i) étant respectivement associé à un module convertisseur de tension continue (4-i) et les régulateurs de courant (3-i) étant respectivement conçus pour générer une troisième grandeur de régulation (ϕ_3_i) pour le module convertisseur de tension continue (4-i) respectivement associé en se basant sur une valeur de consigne (I_des_i) pour un courant dans le module convertisseur de tension continue (4-i) respectivement associé et une valeur déterminée (I_i) pour un courant dans le module convertisseur de tension continue (4-i) respectivement associé,
et fournir au module convertisseur de tension continue (4-i) respectivement associé une combinaison de la première grandeur de régulation (ϕ_1), de la deuxième grandeur de régulation (ϕ_2) et de la troisième grandeur de régulation (ϕ_3_i) du module convertisseur de tension continue (4-i) respectivement associé.

2. Arrangement de régulation selon la revendication 1, le dispositif de commande pilote (1) étant conçu pour générer la première grandeur de régulation (ϕ_1) en utilisant les valeurs déterminées (I_i) pour un courant dans les modules convertisseurs de tension continue (4-i) .

3. Arrangement de régulation selon la revendication 1 ou 2, le dispositif de commande pilote (1) étant conçu pour limiter la première grandeur de régulation (ϕ_1) à une valeur maximale (ϕ_max) prédéfinie et/ou à une valeur minimale (ϕ_min) prédéfinie.

4. Arrangement de régulation selon l'une des revendications 1 à 3, le régulateur de tension (2) étant conçu pour limiter la plage de valeurs pour la deuxième grandeur de régulation (ϕ_2) lorsque tous les régulateurs de courant (3-i) génèrent une troisième grandeur de régulation (ϕ_3_i) différente de zéro.

5. Arrangement de régulation selon l'une des revendications 1 à 4, la première grandeur de régulation (ϕ_1), la deuxième grandeur de régulation (ϕ_2) et la troisième grandeur de régulation (ϕ_3_i) comprenant respectivement un angle de phase par rapport à la spécification d'un rapport cyclique.

6. Convertisseur de tension continue, comprenant :
plusieurs modules convertisseurs de tension continue (4-i) branchés en parallèle qui sont conçus pour convertir une tension continue d'entrée (U_in) en une tension continue de sortie ; et
un arrangement de régulation selon l'une des revendications 1 à 5,
un régulateur de courant (3-i) séparé étant présent dans l'arrangement de régulation pour chaque module convertisseur de tension continue (4-i) dans le convertisseur de tension continue.

7. Convertisseur de tension continue selon la revendication 6, les modules convertisseurs de tension continue (4-i) étant conçus pour réaliser une conversion de tension continue bidirectionnelle.

8. Procédé de régulation d'un convertisseur de tension continue doté de plusieurs modules convertisseurs de tension continue (4-i) branchés en parallèle, comprenant les étapes suivantes :
génération (S1), au moyen d'une commande pilote, d'une première grandeur de régulation (ϕ_1) en se basant sur une valeur de consigne (U_des) pour une tension de sortie du convertisseur de tension continue et une valeur (U_in) pour une tension d'entrée du convertisseur de tension continue ;
génération (S2) d'une deuxième grandeur de régulation (ϕ_2) en se basant sur la valeur de consigne (U_des) de la tension de sortie du convertisseur de tension continue et une valeur déterminée (U_cur) de la tension de sortie du convertisseur de tension continue ;
génération (S3) de plusieurs troisièmes grandeurs de régulation (ϕ_3_i), chaque troisième grandeur de régulation (ϕ_3_i) étant associée à un module convertisseur de tension continue (4-i) et la troisième grandeur de régulation (ϕ_3_i) pour le module convertisseur de tension continue (4-i) respectivement associé étant générée en se basant sur une valeur de consigne (I_des_i) pour un courant dans le module convertisseur de tension continue (4-i) respectivement associé et une valeur déterminée (I_i) pour un courant dans le module convertisseur de tension continue (4-i) respectivement associé ;
commande (S4) des modules convertisseurs de tension continue (4-i) avec une combinaison de la première grandeur de régulation (ϕ_1), de la deuxième grandeur de régulation (ϕ_2) et de la troisième grandeur de régulation (ϕ_3_i) du module convertisseur de tension continue (4-i) respectivement associé.

9. Procédé selon la revendication 8, la combinaison de la première grandeur de régulation (ϕ_1), de la deuxième grandeur de régulation (ϕ_2) et de la troisième grandeur de régulation (ϕ_3_1) respective étant formée à partir d'une somme de la première grandeur de régulation (ϕ_1), de la deuxième grandeur de régulation (ϕ_2) et de la troisième grandeur de régulation (ϕ_3_i) respective.
